# EUROPÄISCHE PATENTSCHRIFT

(11) **EP 1 578 833 B1**
(45) Veröffentlichungstag und Bekanntmachung des Hinweises auf die Patenterteilung: **05.10.2011**
(21) Anmeldenummer: 03779884.0
(22) Anmeldetag: 11.11.2003
(51) Int. Cl.: C08G 18/48, C08G 18/10, C08G 18/12, C09D 5/08

(54) **RAUMTEMPERATURHÄRTENDE REAKTIVSYSTEME**
REACTIVE SYSTEMS HARDENING AT ROOM TEMPERATURE
SYSTEME REACTIF DURCISSANT A TEMPERATURE AMBIANTE

(30) Priorität: 15.11.2002 DE 10254376
(43) Veröffentlichungstag der Anmeldung: 28.09.2005
(73) Patentinhaber: Bayer MaterialScience AG, 51368 Leverkusen (DE)
(72) Erfinder: DETIG-KARLOU, Kamelia, 82049 Pullach (DE); SIMON, Joachim, 40589 Düsseldorf (DE); HOMANN, Malte, 51519 Odenthal (DE); STINGL, Thomas, 56410 Montabaur (DE); TILLACK, Jörg, 51427 Bergisch Gladbach (DE)
(86) Internationale Anmeldenummer: PCT/EP2003/012563
(87) Internationale Veröffentlichungsnummer: WO 2004/046217

(56) Entgegenhaltungen:
- EP-A- 0 950 675
- DE-A- 2 855 120
- US-A- 5 696 221
- DATABASE WPI Section Ch, Week 198717 Derwent Publications Ltd., London, GB; Class A21, AN 1987-116203 XP002274351 & CA 1 219 986 A (SCHERING AG), 31. März 1987 (1987-03-31) in der Anmeldung erwähnt

## Beschreibung

Die Erfindung betrifft neue blockierte Polyurethan-Prepolymere, ein Verfahren zu deren Herstellung und daraus hergestellte raumtemperaturhärtende Reaktivsysteme und deren Verwendung.

Die aus dem Stand der Technik bekannten Polyamin-/Epoxidharz-Systeme zeichnen sich beispielsweise durch exzellente Metallhaftung, sehr gute Chemikalienbeständigkeit und hervorragende Korrosionsschutzeigenschaften aus. Bei lösemittelhaltigen Formulierungen und Pulverlacksystemen können durch den Einsatz von Epoxidharzen mit hohen Molmassen und/oder Polyaminoaniden, z.B. auf der Basis von Dimerfettsäuren als Härter, vernetzte Filme mit hoher Flexibilität erhalten werden. Beschichtungen auf der Basis von lösemittelfreien Flüssigharzen und lösemittelfreien, aminischen Härtern sind aufgrund der niedrigen Molmassen der Epoxidharze und der daraus resultierenden hohen Netzwerkdichte sehr spröde. Daher werden in lösemittelfreien Formulierungen z.B. Teerersatzstoffe wie Cumaronharze zur Plastifizierung eingesetzt. Insbesondere bei Verwendung größerer Mengen an Kohlenwasserstoffharzen neigen derartige Beschichtungen, infolge Migration der nichtfunktionellen Bestandteile, allerdings zur Langzeitversprödung.

Eine gute und dauerhafte Elastifizierung der Epoxidharze lässt sich durch Kombination mit Polyurethanen erreichen. So wurden z.B. in der DE-A 23 38 256 hochmolekulare, aminterminierte Polyetherurethanharnstoffe durch Reaktion von freien Isocyanatgruppen enthaltenden Prepolymeren mit Aminen in stark verdünnten Lösungen hergestellt und anschließend mit Epoxidharzen ausgehärtet. Der Einsatz der hierzu erforderlichen, insbesondere aromatischen Lösungsmittel, ist in der Praxis sowohl vom technischen als auch physiologischen Standpunkt jedoch nachteilig. Andererseits ist die Viskosität der lösemittelfreien Reaktionsprodukte, wie sie gemäß der DE-A 23 38 256 gezielt hergestellt wurden, für die Anwendungen in der Praxis zu hoch.

In der DE-A 24 18 041 wird ein Verfahren zur Herstellung von elastifizierten Formteilen und Flächengebilden beschrieben, in welchem Epoxid- mit Aminverbindungen umgesetzt werden, die durch Hydrolyse prepolymerer Ketimine bzw. Enamine erhalten werden. Mit diesem Verfahren sind chemikalienfeste, gut haftende Duromere mit verbesserten Eigenschaften herstellbar. Nachteilig an dem beschriebenen Verfahren ist der hohe verfahrenstechnische Aufwand.

Die DE-A 21 52 606 beschreibt Reaktivsysteme auf Basis Alkylphenol-blockierter Polyisocyanate und Polyamine, die gegebenenfalls auch in Kombination mit Epoxidharzen ausgehärtet werden können. Auch diese Reaktivsysteme sind mit einigen anwendungstechnischen Nachteilen behaftet, z.B. haben die Reaktivsysteme eine relativ hohe Viskosität und das freiwerdende Blockierungsmittel ist von vergleichsweise niedrigem Molekulargewicht, was dazu führt, dass es mit der Zeit aus der Beschichtung auswandert und die Haftung der Beschichtung zum Substrat nicht mehr ausreichend ist.

Um eine gezielte Reaktion von Polyisocyanat-Prepolymeren mit überschüssigen Mengen Diamin zu ermöglichen, wurde daher vielfach vorgeschlagen, die Polyisocyanate in blockierter Form einzusetzen, so z.B. beschrieben in CA-A 1 219 986, EP-A 293 110 oder EP-A 082 983. Dort werden als bevorzugte Blockierungsmittel Phenole oder substituierte Phenole eingesetzt. Nach erfolgten Reaktion mit den Polyaminen können diese Substanzen aufgrund ihres hohen Siedepunktes aber nicht oder nur unvollständig destillativ aus dem Reaktionsgemisch entfernt werden. Das Verbleiben der gegebenenfalls substituierten Phenole in der Abmischungen oder in der Kunststoffmasse führt aber zu den bereits beschriebenen Nachteilen.

In der EP-A 0 457 089 werden dagegen sekundäre Amine mit vorzugsweise niedrigem Siedepunkt als Blockierungsmittel eingesetzt. Verbleiben diese Amine nach der Deblockierung in der Reaktionsmischung, kommt es leicht zu einer Geruchsbelästigung. Nach dem Einsatz in Epoxid-Systemen kann das sekundäre Amin zwar prinzipiell in das System eingebaut werden, diese Reaktion verläuft jedoch gerade bei tiefen Temperaturen (z.B. Raumtemperatur) relativ langsam, wodurch ein Teil der Amine die Beschichtung verlassen wird. In einer besonders bevorzugten Anwendung wird das aminische Blockierungsmittel nach der Deblockierung aus dem Reaktionsgemisch abdestilliert. Diese Verfahrensweise führt zwar zu Produkten ohne Geruchsbelästigung, ist aber sehr aufwendig und somit teuer.

Aus der US-A 6,060,574 sind darüber hinaus reaktive Zusammensetzungen bekannt, welche aus reversibel blockierten organischen Polyisocyanaten und mindestens einem Polyamin mit mindestens zwei primären Aminogruppen bestehen und gegebenenfalls zusätzlich noch eine Oxirangruppen-haltige Verbindung enthalten. Als Blockierungsmittel für die organischen Polyisocyanate werden Kohlenwasserstoff-Harze mit phenolischen OH-Gruppen eingesetzt. Derart blockierte Polyisocyanate zeichnen sich durch eine deutlich reduzierte Reaktivität gegenüber Polyaminen aus, verglichen mit Alkylphenol-blockierten Polyisocyanaten. Als organische Polyisocyanate können Prepolymere eingesetzt werden, die durch Umsetzung von Polyhydroxy-Verbindungen mit einem Überschuss von Di- oder Polyisocyanaten erhalten werden. Als Polyhydroxy-Verbindungen können z.B. Polyetherpolyole eingesetzt werden, die durch Alkoxylierung geeigneter Starter-Moleküle (z.B. monomere Polyole) zugänglich sind. Die beschriebenen Polyetherpolyole weisen jedoch häufig den Nachteil auf, dass, bedingt durch das Herstellverfahren, die Produkte basisch oder sauer sind (Start der Alkoxylierung z.B. mit KOH, danach Zugabe von Säure). Dies kann sich nachteilig auf die beschriebenen Reaktivsysteme auswirken und z.B. die Lagerstabilität deutlich reduzieren. Darüber hinaus weisen die mit Basen gestarteten Polyetherpolyole meist eine große Menge ungesättigter Endgruppen und eine breite Molekulargewichtsverteilung auf. Die ungesättigten Endgruppen werden durch die basenkalysierte Isomerisierung von Propylenoxid zu Allylalkohol, gebildet, bewirken den Kettenabbruch und die Reduzierung der OH-Funktionalität. Die durch die ungesättigten Endgruppen reduzierte OH-Funktionalität ist sowohl für die mechanischen Eigenschaften als auch die Verträglichkeit in den Reaktivsystemen von großem Nachteil. Aufgabe der vorliegenden Erfindung war daher die Bereitstellung von neuen blockierten Polyurethan-Prepolymeren, die sich problemlos zu Reaktivsystemen verarbeiten lassen, die lösemittelfrei und raumtemperaturhärtend sind. Die aus diesen Reaktivsystemen hergestellten Beschichtungen sollten eine gute Haftung, insbesondere Nasshaftung, Chemikalienbeständigkeit, Schlag- und Stoßfestigkeit bei gleichzeitiger Flexibilität und Elastizität aufweisen. Dabei sollten die blockierten Polyurethan-Prepolymere mit den anderen Bestandteilen des Reaktivsystems besonders gut verträglich sein.

Es wurde nun gefunden, dass insbesondere blockierte Polyurethan-Prepolymere auf Basis von speziellen Polyetherpolyolen, hergestellt mittels DMC-Katalyse, sich besonders gut zu Reaktivsystemen, die Polyamine und gegebenenfalls Oxirangruppen aufweisende Verbindungen enthalten, verarbeiten lassen.

Gegenstand der vorliegenden Erfindung ist daher ein Verfahren zur Herstellung von blockierten Polyurethan-Prepolymeren durch Umsetzung von
a) ein oder mehreren Di- oder Polyisocyanaten mit
b) ein oder mehreren Polyetherpolyolen, die einen Gehalt an ungesättigten Endgruppen von kleiner oder gleich 0,02 Milliäquivalenten pro Gramm Polyol, (Bestimmungsmethode ASTM D2849-69), eine Polydispersität (PD = M_{w}/Mₙ) von 1,01 bis 1,5 und/oder eine OH-Funktionalität von größer oder gleich 1,9 aufweisen,
   zu einem NCO-funktionellen Polyurethan-Prepolymer und anschließender Blockierung der NCO-Gruppen mit
c) mindestens einem phenolische OH-Gruppen aufweisendes Kohlenwasserstoff-Harz und/oder einem gegebenenfalls substituierten Phenol.

Ebenfalls Gegenstand der vorliegenden Erfindung sind blockierte Polyurethan-Prepolymere erhältlich nach dem erfindungsgemäßen Verfahren.

Ein weiterer Gegenstand der vorliegenden Erfindung sind Reaktivsysteme, enthaltend
A) die erfindungsgemäßen Polyurethan-Prepolymere,
B) mindestens ein organisches Amin mit mindestens zwei primären Aminogruppen,
C) gegebenenfalls Oxirangruppen aufweisende Verbindungen, die im Durchschnitt mehr als eine Oxirangruppe pro Molekül enthalten sowie
D) gegebenenfalls Katalysatoren und/oder Additive.

Gegenstand der vorliegenden Erfindung ist auch die Verwendung der erfindungsgemäßen Polyurethan-Prepolymere zur Herstellung von Klebstoffen, Dichtungsmassen, Vergussmassen, Kompositen (Faserverbundwerkstoffe), Formteilen und Beschichtungen. Mögliche Anwendungsgebiete sind dabei insbesondere Korrosionsschutzbeschichtungen im Stahlwasserbau, Schiffsbau (z.B. Ballasttanks) und für Pipelines sowie Fußbodenbeschichtungen.

Geeignete Di- und Polyisocyanate (a) sind aliphatische, cycloaliphatische, aromatische oder heterocyclische organische Di- und Polyisocyanate mit mindestens zwei Isocyanatgruppen sowie Gemische davon. Beispiele für geeignete aliphatische Isocyanate sind Di- oder Triisocyanate wie z.B. Butandiisocyanat, Pentandiisocyanat, Hexandiisocyanat (Hexamethylendiisocyanat, HDI), 4-Isocyanatomethyl-1,8-octandiisocyanat (Triisocyanatononan, TIN) oder cyclische Systeme, wie z.B. 4,4'-Methylenbis(cyclohexylisocyanat) (Desmodur^{®}W, Bayer AG, Leverkusen), 3,5,5-Trimethyl-1-isocyanato-3-isocyanatomethylcyclohexan (Isophorondiisocyanat, IPDI) sowie ω.ω'-Diisocyanato-1,3-dimethylcyclohexan (H₆XDI). Bevorzugt geeignet sind aromatische Polyisocyanate wie z.B. 1,5-Naphthalendiisocyanat, Diisocyanatodiphenylmethan (MDI) bzw. Roh-MDI, Diisocyanatomethylbenzol (2,4- und 2,6-Toluylendiisocyanat, TDI), insbesondere das 2,4- und das 2,6-Isomere und technische Gemische der beiden Isomeren sowie 1,3-Bis(isocyanatomethyl)benzol (XDI).

Ein ganz besonders geeignetes aromatisches Düsocyanat ist 2,4-Toluylendiisocyanat sowie dessen technisches Gemisch aus 70 bis 90 % 2,4-Toluylendiisocyanat und 30 bis 10 % 2,6-Toluylendiisocyanat.

Ebenfalls geeignet im Sinne der Erfindung sind die an sich bekannten Folgeprodukte der genannten Isocyanate mit Biuret-, Isocyanurat-, Iminooxadiazindion-, Uretion-, Allophanat und/oder Urethanstruktur.

Geeignete Polyetherpolyole (b) sind Polyetherpolyole des Molekulargewichtsbereichs 300 bis 20 000, bevorzugt 1000 bis 12000, besonders bevorzugt 2000 bis 6000, mit einem Gehalt an ungesättigten Endgruppen von kleiner oder gleich 0,02 Milliäquivalente pro Gramm Polyol, bevorzugt kleiner oder gleich 0,015 Milliäquivalente pro Gramm Polyol, besonders bevorzugt kleiner oder gleich 0,01 Milliäquivalente pro Gramm Polyol (Bestimmungsmethode ASTM D2849-69). Die Polyetherpolyole haben eine besonders enge Molekulargewichtsverteilung, d.h. eine Polydispersität (PD = M_{w}/Mₙ) von 1,1 bis 1,5 und/oder eine OH-Funktionalität ≥ 1,9. Bevorzugt weisen die genannten Polyetherpolyole eine Polydispersität von 1,1 bis 1,5 und eine OH-Funktionalität von größer 1,9 auf, besonders bevorzugt größer oder gleich 1,95 auf.

In Tabelle 1 sind beispielhaft einzelne geeignete Polyetherpolyole aufgeführt:

**Tabelle 1**

| | **Acclaim^{®} 1000** | **Acclaim^{®} 2200** | **Acclaim^{®} 3201** | **Acclaim^{®} 4200** | **Acclaim^{®} 6300** | **Acclaim^{®} 8200** | **Acclaim^{®} 12200** |
|---|---|---|---|---|---|---|---|
| **Physikalische Daten** | | | | | | | |
| Molekulargewicht | 1000 | 2000 | 3000 | 4000 | 6000 | 8000 | 12000 |
| Funktionalität | 2 | 2 | 2 | 2 | 3 | 2 | 2 |
| Viskosität (25°C) | 70 | 335 | 620 | 980 | 1470 | 3000 | 5950 |
| **Chemische Daten** | | | | | | | |
| OH-Zahl (mg KOH/g) | 112 | 56 | 37 | 28 | 28 | 14 | 10 |
| Doppelbindungsanteil (meq/g) | ≤ 0,0070 | ≤ 0,0070 | ≤ 0,0070 | ≤ 0,0070 | ≤ 0,0070 | ≤ 0,0070 | ≤ 0,0070 |
| Säurezahl (mg KOH/g) | 0,02 | 0,02 | 0,018 | 0,018 | 0,02 | 0,02 | 0,02 |

Alle Acclaim^{®}-Produkte sind bei der Bayer AG, Leverkusen, Deutschland, erhältlich.

Die Polyetherpolyole mit einem Gehalt an ungesättigten Endgruppen von kleiner oder gleich 0,02 Milliäquivalente und besonders enger Molekulargewichtsverteilung, d.h. einer Polydispersität von 1,1 bis 1,5 und/oder einer OH-Funktionalität ≥ 1,9 sind in an sich bekannter Weise durch Alkoxylierung von geeigneten Starter-Molekülen, insbesondere unter Verwendung von Doppehnetallcyanid-Katalysatoren (DMC-Katalyse) herstellbar. Dies ist z.B. in der US-A 5158 922 (z.B. Beispiel 30) und EP-A 0 654 302 302 (S. 5, Z. 26 bis S. 6, Z. 32) beschrieben.

Geeignete Starter-Moleküle für die Herstellung der Polyetherpolyole sind beispielsweise einfache, niedermolekulare Polyole, Wasser, organische Polyamine mit mindestens zwei N-H-Bindungen oder beliebige Gemische derartiger Starter-Moleküle. Für die Alkoxylierung geeignete Alkylenoxide sind insbesondere Ethylenoxid und/oder Propylenoxid, die in beliebiger Reihenfolge oder auch im Gemisch bei der Alkoxylierung eingesetzt werden können.

Bevorzugte Starter-Moleküle zur Herstellung der Polyetherpolyole durch Alkoxylierung, insbesondere nach dem DMC-Verfahren, sind insbesondere einfache Polyole wie Ethylenglykol, Propylenglykol-1,3- und Butandiol-1,4, Hexandiol-1,6, Neopentylglykol, 2-Ethylhexandiol-1,3, Glyzerin, Trimethylolpropan, Pentaerythrit sowie niedermolekulare, Hydroxylgruppen aufweisende Ester derartiger Polyole mit Dicarbonsäuren der nachstehende beispielhafte genannten Art oder niedermolekulare Ethoxylierungs- oder Propoxylierungsprodukte derartiger einfacher Polyole oder beliebige Gemische derartiger modifizierter oder nicht modifizierter Alkohole.

Geeignete Blockierungsmittel c) sind mindestens eine phenolische OH-Gruppe aufweisende Kohlenwasserstoff-Harze und/oder gegebenenfalls substituierte Phenole. Bevorzugte Blockierungsmittel c) sind phenolische OH-Gruppen aufweisende Kohlenwasserstoff-Harze.

Als gegebenenfalls substituierte Phenole der Komponente c) sind insbesondere C₁-C₁₈-Alkylphenole, ganz besonders C₆-C₁₂-Alkylphenole, geeignet, wobei der Alkylrest linear, verzweigt oder auch cyclisch sein kann. Selbstverständlich können auch Isomerenmischungen verschiedener Alkylphenole eingesetzt werden. Beispiele sind Phenol, Kresol und dessen Isomere, Xylenol und dessen Isomere, 2-tert.-Butylphenol, 4-tert.-Butylphenol, Nonylphenol und dessen gegebenenfalls verzweigte Isomere (technisches Isononylphenol). Weitere Beispiele für substituierte Phenole sind Hydroxybenzoesäurealkylester, in welchen die Estergruppe bevorzugt ein C₁- bis C₄-Alkylrest ist. Selbstverständlich können auch Mischungen der genannten Aklkylphenole und Hydroxybenzoesäurealkylester eingesetzt werden.

Phenolische OH-Gruppen aufweisende Kohlenwasserstoff-Harze (c), die zur Blockierung der Isocyanatgruppen-haltigen Polyurethan-Prepolymere eingesetzt werden, sind prinzipiell bekannt und beispielhaft in Ulmanns Encyklopädie der technischen Chemie, 4. Auflage, Band. 12, S. 539 bis 545, (Verlag Chemie, Weinheim 1976), Kirk-Othmer, Encyclopedia of Chemical Technology, 3. Auflage, Band 12, S. 852 bis 869, (John Wiley & Sons, New York 1980) oder Encyclopedia of Polymer Science and Engineering, Bd. 7, S. 758 bis 782, (John Wiley & Sons, New York 1987) beschrieben. Beispiele für geeignete phenolische OH-Gruppen aufweisende Kohlenwasserstoffharze (c) sind Cumaron-Inden-Harze, Petroleumharze oder Terpenharze.

Derartige, phenolische OH-Gruppen aufweisende Kohlenwasserstoff-Harze werden typischerweise hergestellt durch Copolymerisation von ungesättigten Kohlenwasserstoffen der nachstehend genannten Art mit Phenol und/oder alkylierten Phenolen wie z.B. Kresolen in Gegenwart von starken Säuren oder Katalysatoren vom Friedel-Crafts-Typ. Geeignete ungesättigte Kohlenwasserstoffe zur Herstellung der erfindungsgemäß einsetzbaren OH-funktionellen Kohlenwasserstoffharze sind die bei der Crackung von Naphtha oder Gasöl anfallenden Kohlenwasserstoffe, wie beispielsweise Buten, Butadien, Penten, Piperylen, Isopren, Cyclopentadien, Styrol, α-Methylstyrol, Vinyltoluol, Dicyclopentadien, Methyldicyclopentadien, Inden oder Methylinden. Als ungesättigte Kohlenwasserstoffe eignen sich außerdem Terpenharze, wie beispielsweise α-Pinen, β-Pinen, Dipenten, D-Limonen oder Terpentin.

Die geeigneten Kohlenwasserstoff-Harze weisen einen Hydroxylgruppengehalt von 0,1 bis 10,0 Gew.-% und bevorzugt einen Hydroxylgruppengehalt von 0,9 bis 9 Gew.-% auf. Besonders bevorzugt werden bei Raumtemperatur flüssige Kohlenwasserstoff-Harze mit einem Hydroxylgruppengehalt von 2 bis 8 Gew.-%, ganz besonders bevorzugt von 3 bis 5 Gew.-%, eingesetzt.

Die Herstellung der Isocyanatgruppen-haltigen Polyurethan-Prepolymere erfolgt durch Umsetzung der Polyetherpolyole (b) mit überschüssigen Mengen der Di- oder Polyisocyanate (a) oder auch mit einem großen Überschuss der genannten Di- oder Polyisocyanate und anschließender Entfernung des überschüssigen Polyisocyanates, z.B. durch Dünnschichtdestillation. Bevorzugt liegt das Molverhältnis der OH-Gruppen des Polyetherpolyols zu den NCO-Gruppen des Di- oder Polyisocyanats zwischen 1:1,5 und 1:20, besonders bevorzugt zwischen 1:1,8 und 1:5 und ganz besonders bevorzugt zwischen 1:1,95 und 1:2,05. Die Herstellung der Polyurethan-Prepolymere erfolgt im Allgemeinen bei 20 bis 140°C, bevorzugt bei 40 bis 100°C, gegebenenfalls unter der Verwendung von aus der Polyurethanchemie an sich bekannten Katalysatoren, wie beispielsweise metallorganischen Verbindungen wie Zinn(II)octoat; Dibutylzinn(II)diacetat, Dibutylzinn(II)dilaurat oder tertiären Aminen wie Triethylamin oder Diazabicyclooctan. Die Polyurethan-Prepolymere können nach Bedarf auch in inerten Lösungsmitteln hergestellt werden, bevorzugt wird die Umsetzung jedoch lösemittelfrei durchgeführt.

Die Herstellung der erfindungsgemäßen blockierten Polyurethan-Prepolymere erfolgt durch Umsetzung der Isocyanatgruppen-haltigen Polyurethan-Prepolymere mit den phenolische OH-Gruppen aufweisenden Kohlenwasserstoff-Harzen und/oder gegebenenfalls substituierte Phenole (c) bei Temperaturen von 40°C bis 150°C, bevorzugt bei 50°C bis 100°C, besonders bevorzugt bei 60 bis 90°C.

Die Menge der bei der Blockierungsreaktion eingesetzten Komponente (c) sollte zumindest 30 Mol-%, bevorzugt 50 Mol-%, besonders bevorzugt mehr als 95 Mol-%, der Menge der zu blockierenden Isocyanatgruppen entsprechen. Ein geringer Überschuss an Blockierungsmittel kann zweckmäßig sein, um ein vollständige Reaktion aller Isocyanatgruppen zu gewährleisten. In der Regel beträgt der Überschuss nicht mehr als 20 Mol-%, bevorzugt nicht mehr als 15 Mol-% und besonders bevorzugt nicht mehr als 10 Mol-%, bezogen auf die zu blockierenden Isocyanatgruppen. Ganz besonders bevorzugt liegt die Menge der bei der Blockierungsreaktion eingesetzten Komponente (c) daher bei 95 Mol-% bis 110 Mol-%, bezogen auf die Menge der zu blockierenden Isocyanatgruppen des Polyurethan-Prepolymers.

Die Blockierungsreaktion wird bevorzugt unter Mitverwendung von aus der Polyurethanchemie an sich bekannten Katalysatoren, wie beispielsweise metallorganischen Verbindungen wie Zinn(II)-octoat, Dibutylzinn(II)diacetat, Dibutylzinn(II)laurat, 2,3-Dimethyl-3,4,5,6-tetrahydropyrimidin oder tertiären Aminen wie Triethylamin oder Diazabicyclooctan oder 1,8-Diazabicylo[5.4.0]-undec-7-en durchgeführt. Die Blockierungsreaktion kann gegebenenfalls in Anwesenheit inerter Lösungsmittel bzw. Lacklösungsmitteln wie beispielsweise Ethylacetat, Butylacetat, Methoxypropylacetat, Methylethylketon, Methylisobutylketon, Toluol, Xylol, aromatische oder (cyclo-) aliphatische Kohlenwasserstoffgemische oder beliebige Gemische derartiger Lösungsmittel durchgeführt werden. Diese Lösemittel bzw. Lacklösemittel müssen dann im Anschluss an die Synthese zum Erhalt von lösemittelfreien Reaktivsystemen z.B. destillativ wieder abgetrennt werden.

Bevorzugt werden die erfindungsgemäßen Umsetzungen jedoch lösemittelfrei durchgeführt.

Die Zugabe der Komponenten kann sowohl bei der Herstellung der Isocyanatgruppen-haltigen Prepolymere als auch bei der Blockierung derselben in beliebiger Reihenfolge erfolgen. Bevorzugt ist jedoch die Zugabe des Polyisocyanats zum vorgelegten Polyetherpolyol (b) und schließlich die Zugabe der Blockierungs-Komponente (c). Dazu wird das Polyetherpolyol (b) in einem geeigneten Reaktionsgefäß vorgelegt und gegebenenfalls unter Rühren auf 40 bis 100°C erwärmt. Nach Erreichen der gewünschten Temperatur wird dann unter Rühren das Di- oder Polyisocyanat (a) zugegeben und solange gerührt, bis der theoretische NCO-Gehalt des nach der gewählten Stöchiometrie zu erwartenden Polyurethan-Prepolymers erreicht oder geringfügig unterschritten ist. Zur Beschleunigung der Blockierungsreaktion wird dann ein geeigneter Katalysator, wie z.B. Dibutylzinn(II)dilaurat zugegeben, wobei die Temperatur der Reaktionsmischung vor oder nach der Zugabe des Katalysators gegebenenfalls auf einen Wert zwischen 50 und 100°C eingestellt wird. Nach dem Erreichen der gewünschten Temperatur wird nun das Blockierungsmittel (c) zugegeben und die Reaktionsmischung solange erwärmt, bis der Gehalt an freien Isocyanatgruppen kleiner als 0,5 Gew.-%, bevorzugt kleiner als 0,2 Gew.-%, besonders bevorzugt kleiner als 0,1 Gew.-%, ist. Danach wird das Reaktionsgemisch abgekühlt und gegebenenfalls noch mit einem Reaktionsstopper, wie z.B. Benzoylchlorid versehen.

In einer weiteren Ausführungsform des erfindungsgemäßen Verfahrens wird das Di- oder Polyisocyanat (a) in einem geeigneten Reaktionsgefäß vorgelegt und gegebenenfalls unter Rühren auf 40 bis 100°C erwärmt. Nach Erreichen der gewünschten Temperatur wird unter Rühren dann das Polyetherpolyol (a) zugegeben und solange gerührt, bis der theoretische NCO-Gehalt des nach der gewählten Stöchiometrie zu erwartenden Polyurethan-Prepolymers erreicht oder geringfügig unterschritten ist. Die weitere Umsetzung erfolgt dann wie bereits beschrieben.

Geeignete Komponenten (B) zur Herstellung des Reaktivsystems, enthaltend die erfindungsgemäßen blockierten PU-Prepolymere sind Polyamine, die mindestens zwei primäre Aminogruppen pro Molekül und gegebenenfalls noch sekundäre Aminogruppen aufweisen und bevorzugt ein mittleres Molekulargewicht von 60 bis 500 aufweisen. Geeignet sind beispielsweise Ethylendiamin, 1,2- und 1,3-Diaminopropan, 1,4-Diaminobutan, 2,2,4- und/oder 2,4,4-Trimethylhexamethylendiamin, die isomeren Xylylendiamine, 1,2- und 1,4-Diaminocyclohexan, 4,4'-Diaminodicyclohexylmethan, 1,3-Diaminocyclopentan, 4,4'-Diaminodicyclohexylsulfon, 4,4'-Diaminodicyclohexylpropan-1,3, 4,4'-Diaminodicyclohexylpropan-2,2, 3,3'-Dimethyl-4,4'-diaminodicyclohexylmethan, 3-Aminomethyl-3,3,5-trimethylcyclohexylamin (Isophorondiamin), 3(4)-Aminomethyl-1-methylcyclohexylamin oder technisches Bisaminomethyltricyclodecan oder auch solche Polyamine, die neben mindestens zwei primären Aminogruppen noch sekundäre Aminogruppen aufweisen, wie beispielsweise Diethylentriamin oder Triethylentetramin.

Bevorzugt werden die Polyamine, insbesondere Diamine des genannten Molekulargewichtsbereichs, eingesetzt, die einen oder mehrere cycloaliphatische Ringe aufweisen. Hierzu gehören beispielsweise 1,2- und 1,4-Diaminocyclohexan, 4,4'-Diaminodicyclohexylmethan, 1,3-Diaminocyclopentan, 4,4'-Diaminodicyclohexylsulfon, 4,4'-Diaminodicyclohexylpropan-1,3, 4,4'-Diaminodicyclohexylpropan-2,2, 3,3'-Dimethyl-4,4'-diaminodicyclohexylmethan, 3-Aminomethyl-3,3,5-trimethylcyclohexylamin (Isophorondiamin), 3(4)-Aminomethyl-1-methylcyclohexylamin oder technisches Bisaminomethyltricyclodecan.

Ebenfalls einsetzbar als Komponente (B) sind Addukte, die durch Umsetzung eines Überschusses der genannten Polyamine mit Epoxidharzen der nachstehend genannten Art hergestellt werden.

Weiterhin einsetzbar als Komponente (B) sind Polyetheramine, die durch Umsetzung von Polyetherpolyolen mit Ammoniak hergestellt werden und beispielsweise von der Fa. Huntsman, USA unter dem Handelsnamen "Jeffamin^{®}" vertrieben werden.

Des Weiteren sind auch Polyamidharze als Komponente B) geeignet. Derartige Polyamidharze, zu denen die Polyaminoamide und die Polyaminoimidazoline gehören, werden z.B. von der Henkel KGaA unter dem Handelsnamen "Versamid^{®}" vertrieben.

Selbstverständlich ist es auch möglich Gemische der genannte Polyamine als Komponente (B) einzusetzen.

Komponente (C) sind Oxirangruppen-aufweisende Verbindungen. Geeignete Oxirangruppen-auf weisende Verbindungen sind Epoxidharze, die im Durchschnitt mehr als eine Epoxidgruppe pro Molekül enthaltend. Beispiele für geeignete Epoxidharze sind Glycidylether von mehrwertigen Alkoholen wie z.B. Butandiol, Hexandiol, Glycerin, hydriertem Diphenylolpropan oder mehrwertigen Phenolen wie z.B. Resorcin, Diphenylolpropan-2,2 (Bisphenol A) Diphenylolmethan (Bisphenol F) oder Phenol-Aldehyd-Kondensaten. Es können auch Glycidylester mehrwertiger Carbonsäuren, wie Hexahydrophtalsäure oder dimerisierte Fettsäure verwendet werden.

Bevorzugt ist der Einsatz von flüssigen Epoxidharzen auf Basis von Epichlorhydrin und Diphenylolpropan-2,2 (Bisphenol A) oder Diphenylolmethan (Bisphenol F) oder deren Mischungen. Gegebenenfalls kann mit monofunktionellen Epoxidverbindungen die Viskosität der Mischungen gesenkt werden und dadurch die Verarbeitung verbessert werden. Beispiele hierfür sind aliphatische und aromatische Glycidylether wie Butylglycidylether, Phenylglycidylether oder Glycidylester wie Versaticsäureglycidylester oder Epoxide wie Styroloxid oder 1,2-Epoxidodecan.

In den lösemittelfreien, raumtemperaturhärtenden Reaktivsystemen, enthaltend die erfindungsgemäßen blockierten Polyurethan-Prepolymeren, liegen im Allgemeinen pro Epoxidgruppe der Komponente (C) 0,4 bis 0,9, bevorzugt 0,5 bis 0,8 primäre Aminogruppen der Komponente (B) und 0,02 bis 0,6, bevorzugt 0,03 bis 0,5 blockierte Isocyanatgruppen der Komponente (A) vor.

Zur Herstellung von gebrauchsfertigen Mischungen können den Reaktivsystemen neben den Komponenten A), B) und gegebenenfalls C) die üblichen Hilfs- und Zusatzmittel wie beispielsweise Füllstoffe, Lösungsmittel, Verlaufshilfsmittel, Pigmente, Lösungsmittel, Reaktionsbeschleuniger oder Viskositätsregulatoren einverleibt werden. Beispielhaft genannt seien Reaktionsbeschleuniger wie Salicylsäure, Bis(dimethylaminomethyl)phenol oder Tris(dimethylaminomethyl)phenol, Füllstoffe wie Sand, Gesteinsmehl, Kieselsäure, Asbestmehl, Kaolin, Talkum, Metallpulver, Teer, Teerpech, Asphalte, Korkschrote, Polyamide, Weichmacher wie beispielsweise Phtalsäureester oder andere Viskositätsregulatoren wie beispielsweise Benzylalkohol.

Selbstverständlich kann der gebrauchsfertigen Mischung gegebenenfalls bis zu 20 Gew.-%, bevorzugt bis zu 10 Gew.-%, besonders bevorzugt bis zu 5 Gew.% eines Lösemittels oder Lacklösemittels der zuvor bereits beschriebenen Art für applikationstechnische Zwecke zugefügt werden. Sollte an dieser Stelle Lösemittel eingesetzt werden, kann auch bei einem eventuellen Einsatz von Lösemitteln während der Herstellung der erfindungsgemäßen Polyurethan-Prepolymere auf das Entfernen des Lösemittels verzichtet werden. Bevorzugt sind allerdings lösemittelfreie gebrauchsfertige Mischungen.

Die lösemittelfreien, raumtemperaturhärtenden Reaktivsysteme, enthaltend die erfindungsgemäßen blockierten Polyurethan-Prepolymere, eignen sich zur Herstellung von Beschichtungen, Klebstoffen, Dichtungsmassen, Vergussmassen oder Formteilen auf allen Anwendungsgebieten, wo gute Haftung, Chemikalienfestigkeit, sowie hohe Schlag- und Stoßfestigkeit, verbunden mit guter Flexibilität und Elastizität gefordert werden. Besonders gut geeignet sind die erfindungsgemäßen Systeme als Korrosionsschutzbeschichtungen. Insbesondere bei Belastung mit aggressiven Medien, wie beispielsweise bei der Ballasttank-Beschichtung zeichnen sich die Systeme durch eine gute Nasshaftung und eine gute Haftung unter Kothodenschutzbedingungen aus.

Darüber hinaus zeigen die erfindungsgemäßen blockierten Polyurethan-Prepolymere eine hervorragende Verträglichkeit mit den Komponenten B) und C), da die Reaktion von Epoxidharz/Amin und blockiertem Isocyanat/Amin so eingestellt werden kann, dass die Reaktivsysteme einen verträglichen Blend bei Raumtemperatur ergeben.

### Beispiele

### Vorbemerkung:

Die in den Beispielen zur Herstellung der erfindungsgemäßen blockierten Polyurethan-Prepolymere eingesetzten Polyetherpolyole sind bei der Bayer AG, Leverkusen, Deutschland, erhältlich, und sind durch folgende Kennzahlen charakterisiert:

**Tabelle 2:**

| | Acclaim^{®} 1000 | Acclaim^{®} 2200 | Acclaim^{®} 3201 | Acclaim^{®} 4200 |
|---|---|---|---|---|
| **Physikalische Daten** | | | | |
| Molekulargewicht | 1000 | 2000 | 3000 | 4000 |
| OH-Funktionalität | 2 | 2 | 2 | 2 |
| Viskosität (25°C) | 70 | 335 | 620 | 980 |
| **Chemische Daten** | | | | |
| OH-Zahl (mg KOH/g) | 112 | 56 | 37 | 28 |
| Gehalt ungesättigter Endgruppen (meq/g) | ≤ 0,0070 | ≤ 0,0070 | ≤ 0,0070 | ≤ 0,0070 |
| Säurezahl (mg KOH/g) | 0,02 | 0,02 | 0,018 | 0,018 |

### Eingesetzte Materialien:

| **Handelsname** | **chem. Bezeichnung** | **Hersteller** |
|---|---|---|
| Novares^{®} LX 200 | Phenolisch modifiziertes Kohlenwasserstoff-Flüssigharz, Co-Polymerisat ungesättigter, aromatischer C₉-/C₁₀-Kohlenwasserstoffe; OH-Gehalt: 4 % | VFT AG, Duisburg, DE |
| Novares^{®} LA 300 | Phenolisch modifiziertes Kohlenwasserstoff-Flüssigharz, Co-Polymerisat ungesättigter, aromatischer C₉-/C₁₀-Kohlenwasserstoffe; OH-Gehalt: 2 % | VFT AG, Duisburg, DE |
| D.E.R 358 | flüssiges Epoxidharz auf Basis Bisphenol A und Bisphenol F | Dow Plastics, Midland, USA |
| Perenol^{®} E 8 | Additiv zur Entlüftung und Entschäumung | Cognis Deutschland GmbH&Co. KG, Düsseldorf, DE |
| Polypox^{®} H 031 | modifiziertes cycloaliphatisches Polyamin | UPPC, Mietingen-Baltringen, DE |
| Laromin^{®} C 260 | Bis(4-Amino-3-methylcyclohexyl)methan) | BASF AG, Ludwigshafen, DE |

### Vergleichsbeispiel 1:

### a) Herstellung eines blockierten Polyurethan-Prepolymers unter Verwendung eines Polyetherpolyols, hergestellt durch basisch katalysierte Alkoxylierung:

665,28 g eines Polyetherpolyols der OH-Zahl 44, hergestellt durch basisch katalysierte, gleichzeitige Ethoxylierung und Propoxylierung (EO/PO-Verhältnis = 2:8) eines 2:1 Gemisches von Propylenglykol und Glycerin, werden mit 90,79 g 2,4-Diisocyanatotoluol und 0,04 g 2-Chlorpropionsäure solange bei 60°C prepolymerisiert, bis der theoretische NCO-Gehalt von 2,9 Gew.-% erreicht ist. Anschließend werden 243,93 g eines handelsüblichen Kohlenwasserstoffharzes mit einem Hydroxylgruppengehalt von 4 Gew.-% (Novares^{®} LX 200) zugesetzt, mit 0,07 g Dibutylzinn(II)dilaurat katalysiert und 10 Stunden bei 80°C gerührt. Anschließend werden 0,23 g Benzoylchlorid zugegeben. Nach dieser Zeit ist im IR-Spektrum kein freies Isocyanat mehr nachweisbar. Nach der NCO-Titration ist der NCO-Gehalt kleiner 0,2 Gew.-%. Das erhaltene blockierte Isocyanat-Prepolymer besitzt folgende Kenndaten:

| | |
|---|---|
| blockierter NCO-Gehalt: | 2,11 Gew.-% |
| Viskosität (23°C): | 76500 mPa·s |

### b) Herstellung des Reaktivsystems:

20 g des Prepolymers aus a) werden mit 6,6 g Octahydro-4.7-methanoinden-1.5-dimethanamin, 20 g D.E.R 358, 0,2 g 2,3-Dimethyl-3,4,5,6-tetrahydropyrimidin, 0,4 g Ölsäure, 0,2 g Perenol^{®} E 8 und 0,2 g Benzylalkohol innig verrührt. Die Mischung wird in einer Schichtdicke von 3 mm ausgegossen.

Nach einigen Stunden erhält man einen trüben und folglich inhomogenen Prüfkörper.

| | |
|---|---|
| Bruchspannung: | 20,3 MPa |
| Bruchdehnung: | 32,1 % |
| Weiterreißwiderstand: | 24,3 N/mm |

### Beispiel 1

### a) Herstellung eines blockierten Polyurethan-Prepolymers mit Acclaim^{®} 2200:

605,53 g des Polyetherpolyols Acclaim^{®} 2200 der OH-Zahl 56 werden mit 105,36 g 2,4-Diisocyanatotoluol und 0,04 g 2-Chlorpropionsäure solange bei 60°C prepolymerisiert, bis der theoretische NCO-Gehalt von 3,58 Gew.-% erreicht ist. Anschließend setzt man 289,11 g eines handelsüblichen Kohlenwasserstoffharzes mit einem Hydroxylgruppengehalt von 4 Gew.-% (Novares^{®} LX 200) zu, katalysiert mit 0,07 Dibutylzinn(II)dilaurat und rührt 10 Stunden bei 80°C. Anschließend setzt man 0,15 g Benzoylchlorid zu. Nach dieser Zeit ist im IR-Spektrum kein freies Isocyanat mehr nachweisbar. Nach der NCO-Titration ist der NCO-Gehalt kleiner 0,2 Gew.-%. Das erhaltene blockierte Isocyanatprepolymer besitzt folgende Kenndaten:

| | |
|---|---|
| blockierter NCO-Gehalt: | 2,54Gew.-% |
| Viskosität (23°C): . | 63000 mPas |

### b) Herstellung eines Reaktivsystems:

20 g des Prepolymers aus a) werden mit 6,74 g Octahydro-4.7-methanoinden-1.5-dimethanamin, 20 g D.E.R 358, 0,2 g 2,3-Dimethyl-3,4,5,6-tetrahydropyrimidin, 0,4 g Ölsäure, 0,2 g Perenol^{®} E 8 und 0,2 g Benzylalkohol innig verrührt. Die Mischung wird in einer Schichtdicke von 3 mm ausgegossen. Nach einigen Stunden erhält man einen transparenten, elastischen Kunststoff mit folgenden mechanischen Kennwerten:

| | |
|---|---|
| Bruchspannung: | 19,1 MPa |
| Bruchdehnung: | 44,2 % |
| Weiterreißwiderstand: | 30,6 N/mm |

Mit dem erfindungsgemäßen Reaktivsystem gemäß Beispiel 1, erhält man im Vergleich zu Vergleichsbeispiel 1 einen transparenten und folglich homogenen Kunststoff. Der im Vergleichsbeispiel 1 hergestellte Kunststoff zeigt auch deutlich schlechtere mechanische Werte.

### Beispiel 2

### a) Herstellung eines blockierten Polyurethan-Prepolymers mit Acclaim^{®} 2200:

908,29 g des Polyetherpolyols Acclaim^{®} 2200 der OH-Zahl 56 werden mit 158,04 g 2,4-Diisocyanatotoluol und 2,6-Diisocyanatotoluol (80:20) solange bei 65°C prepolymerisiert, bis der theoretische NCO-Gehalt von 3,58 Gew.-% erreicht ist. Anschließend setzt man 433,66 g eines handelsüblichen Kohlenwasserstoffharzes mit einem Hydroxylgruppengehalt von 4 Gew.-% (Novares^{®} LX 200) zu, katalysiert mit 0,11 g Dibutylzinn(II)dilaurat und rührt 10 Stunden bei 80°C. Anschließend setzt man 0,23 g Benzoylchlorid zu. Nach dieser Zeit ist im IR-Spektrum kein freies Isocyanat mehr nachweisbar. Nach der NCO-Titration ist der NCO-Gehalt gleich 0,2 Gew.-%. Das erhaltene blockierte Isocyanatprepolymer besitzt folgende Kenndaten:

| | |
|---|---|
| blockierter NCO-Gehalt: | 2,45 Gew.-% |
| Viskosität (23°C): | 73000 mPas |

### b) Herstellung eines Reaktivsystems:

5 g des Prepolymers werden mit 1,53 g Octahydro-4.7-methanoinden-1.5-dimethanamin und D.E.R 358 innig verrührt. Die Mischung wird in einer Schichtdicke von 3 mm ausgegossen. Nach einigen Stunden erhält man einen transparenten, elastischen Kunststoff.

### Beispiel 3

### a) Herstellung eines blockierten Polyurethan-Prepolymers mit Acclaim^{®} 2200:

496,57 g des Polyetherpolyols Acclaim^{®} 2200 der OH-Zahl 56 werden mit 86,4 g 2,4-Diisocyanatotoluol und 0,04 g 2-Chlorpropionsäure solange bei 60°C prepolymerisiert, bis der theoretische NCO-Gehalt von 3,58 Gew.-% erreicht ist. Anschließend setzt man 417,03 g eines handelsüblichen Kohlenwasserstoffharzes mit einem Hydroxylgruppengehalt von 2 Gew.-% (Novares^{®} LA 300) zu, katalysiert mit 0,07 g Dibutylzinn(II)dilaurat und rührt 10 Stunden bei 80°C. Anschließend setzt man 0,15 g Benzoylchlorid zu. Nach dieser Zeit ist im IR-Spektrum kein freies Isocyanat mehr nachweisbar. Nach der NCO-Titration ist der NCO-Gehalt kleiner 0,2 Gew.-%. Das erhaltene blockierte Isocyanatprepolymer besitzt folgende Kenndaten:

| | |
|---|---|
| blockierter NCO-Gehalt: | 2,02Gew.-% |
| Viskosität (23°C): | 28000 mPas |

### b) Herstellung eines Reaktivsystems:

20 g des Prepolymers aus a) werden mit 6,62 g Octahydro-4.7-methanoinden-1.5-dimethanamin, 20 g D.E.R 358, 0,2 g 2,3-Dimethyl-3,4,5,6-tetrahydropyrimidin, 0,4 g Ölsäure, 0,2 g Perenol^{®} E 8 und 0,2 g Benzylalkohol innig verrührt. Die Mischung wird in einer Schichtdicke von 3 mm ausgegossen. Nach einigen Stunden erhält man einen leicht trüben, elastischen Kunststoff mit folgenden mechanischen Kenndaten:

| | |
|---|---|
| Bruchspannung | 19,3 MPa |
| Bruchdehnung: | 44,2 % |
| Weiterreißwiderstand: | 30,6 N/mm |

### Beispiel 4

### a) Herstellung eines blockierten Polyurethan-Prepolymers mit Acclaim^{®} 1000 und Acclaim^{®} 3201:

223,14 g des Polyetherpolyols Acclaim^{®} 1000 der OH-Zahl 112 und 74,38 g eines Polyetherpolyols Acclaim^{®} 3201 der OH-Zahl 37 werden mit 86,28 g 2,4-Diisocyanatotoluol solange bei 60°C prepolymerisiert, bis der theoretische NCO-Gehalt von 5,43 Gew.-% erreicht ist. Anschließend setzt man 416,2 g eines handelsüblichen Kohlenwasserstoffharzes mit einem Hydroxylgruppengehalt von 2 Gew.-% (Novares^{®} LA 300) zu, katalysiert mit 0,06 g Dibutylzinn(II)dilaurat und rührt 10 Stunden bei 80°C. Anschließend setzt man 0,12 g Benzoylchlorid zu. Nach dieser Zeit ist im IR-Spektrum kein freies Isocyanat mehr nachweisbar. Nach der NCO-Titration ist der NCO-Gehalt kleiner 0,2 Gew.-%. Das erhaltene blockierte Isocyanatprepolymer besitzt folgende Kenndaten:

| | |
|---|---|
| blockierter NCO-Gehalt: | 2,35 Gew.-% |
| Viskosität (23°C): | 87000 mPas |

### b) Herstellung eines Reaktivsystems:

5 g des Prepolymers werden mit 1,66 g Octahydro-4.7-methanoinden-1.5-dimethanamin, 5 g D.E.R 358, innig verrührt. Die Mischung wird in einer Schichtdicke von 3 mm ausgegossen. Nach einigen Stunden erhält man einen transparenten, elastischen Kunststoff einer Shore-A-Härte von 92.

### Beispiel 5

### Herstellung des blockierten Polyurethan-Prepolymers mit Acclaim^{®} 1000 und Acclaim^{®} 4200:

226,67 g eines Polyetherpolyols Acclaim^{®} 1000 der OH-Zahl 112 und 75,64 g eines Polyetherpolyols Acclaim^{®} 4200 der OH-Zahl 28 werden mit 85,46 g 2,4-Diisocyanatotoluol solange bei 60°C prepolymerisiert, bis der theoretische NCO-Gehalt von 5,32 Gew.-% erreicht ist. Anschließend setzt man 412,23 g eines handelsüblichen Kohlenwasserstoffharzes mit einem Hydroxylgruppengehalt von 2 Gew.-% (Novares^{®} LA 300 zu, katalysiert mit 0,06 g Dibutylzinn-(II)dilaurat und rührt 10 Stunden bei 80°C. Anschließend setzt man 0,12 g Benzoylchlorid zu. Nach dieser Zeit ist im IR-Spektrum kein freies Isocyanat mehr nachweisbar. Nach der NCO-Titration ist der NCO-Gehalt kleiner 0,2 Gew.-%. Das erhaltene blockierte Isocyanatprepolymer besitzt folgende Kenndaten:

| | |
|---|---|
| blockierter NCO-Gehalt: | 2,34 Gew.-% |
| Viskosität (23°C): | 81000 mPas |

### b) Herstellung eines Reaktivsystems:

5 g des Prepolymers werden mit 1,66 g Octahydro-4.7-methanoinden-1.5-dimethanamin, 5 g D.E.R 358, innig verrührt. Die Mischung wird in einer Schichtdicke von 3 mm ausgegossen. Nach einigen Stunden erhält man einen transparenten, elastischen Kunststoff einer Shore-A-Härte von 95.

### Beispiel 6

### a) Herstellung des blockierten Polyurethan-Prepolymers mit Acclaim^{®} 1000:

330,4 g des Polyetherpolyols Acclaim^{®} 1000 der OH-Zahl 112 werden mit 114,98 g 2,4-Diisocyanatotoluol solange bei 60°C prepolymerisiert, bis der theoretische NCO-Gehalt von 6,23 Gew.-% erreicht ist. Anschließend setzt man 554,62 g eines handelsüblichen Kohlenwasserstoffharzes mit einem Hydroxylgruppengehalt von 2 Gew.-% (Novares^{®} LA 300) zu, katalysiert mit 0,07 g Dibutylzinn(II)dilaurat und rührt 10 Stunden bei 80°C. Anschließend werden 0,15 g Benzoylchlorid zugegeben. Nach dieser Zeit ist im IR-Spektrum kein freies Isocyanat mehr nachweisbar. Nach der NCO-Titration ist der NCO-Gehalt kleiner 0,2 Gew.-%. Das erhaltene blockierte Isocyanatprepolymer besitzt folgende Kenndaten:

| | |
|---|---|
| blockierter NCO-Gehalt: | 2,65 Gew.-% |
| Viskosität (23°C): | 56000 mPas |

### b) Herstellung eines Reaktivsystems:

20 g des Prepolymers werden mit 6,75 g Octahydro-4.7-methanoinden-1.5-dimethanamin, 20 g D.E.R 358, 0,4 g Ölsäure, 0,2 g Perenol^{®} E 8 und 0,2 g Benzylalkohol innig verrührt. Die Mischung wird in einer Schichtdicke von 3 mm ausgegossen. Nach einigen Stunden erhält man einen leicht trüben, elastischen Kunststoff mit folgenden Kenndaten:

| | |
|---|---|
| Bruchspannung: | 20,8 MPa |
| Bruchdehnung: | 46,3 % |
| Weiterreißwiderstand: | 32,4 N/mm |

### Beispiel 7

### a) Herstellung eines blockierten Polyurethan-Prepolymers mit Acclaim^{®} 3201:

949,13 g des Polyetherpolyols Acclaim^{®} 3201 der OH-Zahl 37 werden mit 110 g 2,4-Diisocyanatotoluol und 0,04 g Chlorpropionsäure solange bei 60°C prepolymerisiert, bis der theoretische NCO-Gehalt von 2,52 Gew.-% erreicht ist. Anschließend setzt man 140,18 g Isononylpenol zu, katalysiert mit 0,08 g Dibutylzinn(II)dilaurat und rührt 10 Stunden bei 80°C. Anschließend setzt man 0,18 g Benzoylchlorid zu. Nach dieser Zeit ist im IR-Spekkum kein freies Isocyanat mehr nachweisbar. Nach der NCO-Titration ist der NCO-Gehalt kleiner 0,2 Gew.-%. Das erhaltene blockierte Isocyanatprepolymer besitzt folgende Kenndaten:

| | |
|---|---|
| blockierter NCO-Gehalt: | 2,25 Gew.-% |
| Viskosität (23°C): | 43100 mPas |

### b) Herstellung eines Reaktivsystems:

5 g des Prepolymers werden mit 1,52 g Octahydro-4.7-methanoinden-1.5-dimethanamin und 5 D.E.R 358, innig verrührt. Die Mischung wird in einer Schichtdicke von 3 mm ausgegossen. Nach einigen Stunden erhält man einen transparenten hochelastischen Kunststoff einer Shore-A-Härte von 82.

### Beispiel 8

### a) Herstellung eines blockierten Polyurethan-Prepolymers mit Acclaim^{®} 2200:

880,22 g des Polyetherpolyols Acclaim^{®} 2200 der OH-Zahl 56 werden mit 145,5 g 2,4-Diisocyanatotoluol und 0,04 g Chlorpropionsäure solange bei 60°C prepolymerisiert, bis der theoretische NCO-Gehalt von 3,24 Gew.-% erreicht ist. Anschließend setzt man 174,28 g 2,6-Di-tert.-butyl-4-methyl-phenol (Ionol) mit einen Hydroxylgruppengehalt von 7,73 Gew.-% zu, katalysiert mit 0,08 g 1,8-Diazabicylo[5.4.0]undec-7-en und rührt 10 Stunden bei 80°C. Anschließend setzt man 0,18 g Benzoylchlorid zu. Nach dieser Zeit ist im IR-Spektrum kein freies Isocyanat mehr nachweisbar. Nach der NCO-Titration ist der NCO-Gehalt kleiner 0,2 Gew.-%. Das erhaltene blockierte Isocyanatprepolymer besitzt folgende Kenndaten:

| | |
|---|---|
| blockierter NCO-Gehalt: | 2,77 Gew.-% |
| Viskosität (23°C): | 117000 mPas |

### b) Herstellung des Reaktivsystems:

5 g des Prepolymers werden mit 2,1 g 4,4'-Diaminodicyclohexylmethan, 0,05 g 1,8-Diazabicylo[5.4.0]undec-7-en und 5 g D.E.R 358 innig verrührt. Die Mischung wird in einer Schichtdicke von 3 mm ausgegossen. Nach einigen Stunden bei 40°C erhält man einen transparenten, hochelastischen Kunststoff einer Shore-A-Härte von 85,2.

### c) Herstellung eines weiteren Reaktivsystems:

40 g des Prepolymers werden mit 2,44 g Polypox^{®} H 031, 1 g 2,3-Dimethyl-3,4,5,6-tetrahydropyrimidin innig verrührt. Die Mischung wird in einer Schichtdicke von 3 mm ausgegossen. Nach einigen Stunden erhält man einen transparenten, elastischen Kunststoff einer Shore-A-Härte von 85.

### Beispiel 9

### Herstellung von Reaktivsystemen mit Laromin^{®} C 260:

Je 10 g der nach Beispiel 1-8 hergestellten, blockierten Polyurethan-Prepolymere, werden mit je 0,05 g Perenol^{®} E 8 und 0,05 g 2,3-Dimethyl-3,4,5,6-tetrahydropyrimidin unter Rühren vermischt. Danach werden jeweils 0,4, 0,6 bzw. 0,8 g Laromin^{®} C 260 unter Rühren zugegeben und die Reaktivmischung dann 3 Tage bei Umgebungstemperatur stehengelassen. In allen Fällen werden transparente, homogene, gut ausgehärtete und elastische Kunststoffe erhalten.

## Patentansprüche

1. Verfahren zur Herstellung von blockierten Polyurethan-Prepolymeren durch Umsetzung von
a) ein oder mehreren Di- oder Polyisocyanaten mit
b) ein oder mehreren Polyetherpolyolen, die einen Gehalt an ungesättigten Endgruppen von kleiner oder gleich 0,02 Milliäquivalenten pro Gramm Polyol, (Bestimmungsmethode ASTM D2849-69), eine Polydispersität (PD = M_{w}/Mₙ) von 1,01 bis 1,5 und/oder eine OH-Funktionalität von größer oder gleich 1,9 aufweisen,
zu einem NCO-funktionellen Polyurethan-Prepolymer und anschließender Blockierung der NCO-Gruppen mit
c) mindestens einem phenolische OH-Gruppen aufweisendes Kohlenwasserstoff-Harz und/oder einem gegebenenfalls substituierten Phenol.

2. Blockierte Polyurethan-Prepolymere erhältlich nach dem Verfahren gemäß Anspruch 1.

3. Blockierte Polyurethan-Prepolymere gemäß Anspruch 2, **dadurch gekennzeichnet, dass** die Komponente a) ein aromatisches Polyisocyanat oder ein Gemisch aromatischer Polyisocyanate ist.

4. Blockierte Polyurethan-Prepolymere gemäß Anspruch 2 oder 3, **dadurch gekennzeichnet, dass** die Komponente b) ein Polyetherpolyol mit einer Polydispersität von 1,1 bis 1,5 und einer OH-Funktionalität von größer 1,9 ist.

5. Blockierte Polyurethan-Prepolymere gemäß Anspruch 4, **dadurch gekennzeichnet, dass** die Komponente b) eine OH-Funktionalität von größer oder gleich 1,95 aufweist.

6. Blockierte Polyurethan-Prepolymere gemäß einem oder mehreren der Ansprüche 2 bis 5, **dadurch gekennzeichnet, dass** die Komponente c) phenolische OH-Gruppen aufweisende Kohlenwasserstoff-Harze mit einem Hydroxylgruppengehalt von 0,1 Gew.-% bis 10 Gew.-% sind.

7. Blockierte Polyurethan-Prepolymere gemäß Anspruch 6, **dadurch gekennzeichnet, dass** die Komponente c) bei Raumtemperatur flüssige Kohlenwasserstoff-Harze mit einem Hydroxylgruppengehalt von 2 Gew.-% bis 8 Gew.-% sind.

8. Reaktivsysteme, enthaltend
A) Polyurethan-Prepolymere gemäß Anspruch 2,
B) mindestens ein organisches Amin mit mindestens zwei primären Aminogruppen,
C) gegebenenfalls Oxirangruppen aufweisende Verbindungen, die im Durchschnitt mehr als eine Oxirangruppe pro Molekül enthalten sowie
D) gegebenenfalls Katalysatoren und/oder Additive.

9. Verwendung der blockierten Polyurethan-Prepolymere gemäß Anspruch 2 zur Herstellung von Klebstoffen, Dichtungsmassen, Vergussmassen, Kompositen (Faserverbundwerkstoffe), Formteilen und Beschichtungen.

10. Verwendung der blockierten Polyurethan-Prepolymere gemäß Anspruch 2 zur Herstellung von Korrosionsschutzbeschichtungen im Stahlwasserbau, Schiffsbau und für Pipelines.

## Claims

1. Process for producing capped polyurethane prepolymers via reaction of
a) one or more di- or polyisocyanates with
b) one or more polyether polyols which have a content of unsaturated terminal groups which is smaller than or equal to 0.02 milliequivalents per gram of polyol (determination method ASTM D2849-69), a polydispersity (PD = M_{w}/Mₙ) which is from 1.01 to 1.5 and/or an OH functionality which is greater than or equal to 1.9
to give an NCO-functional polyurethane prepolymer, and subsequent capping of the NCO groups
c) with at least one hydrocarbon resin having phenolic OH groups and/or with an optionally substituted phenol.

2. Capped polyurethane prepolymers obtainable by the process according to Claim 1.

3. Capped polyurethane prepolymers according to Claim 2, **characterized in that** component a) is an aromatic polyisocyanate or a mixture of aromatic polyisocyanates.

4. Capped polyurethane prepolymers according to Claim 2 or 3, **characterized in that** component b) is a polyether polyol with a polydispersity which is from 1.1 to 1.5 and with an OH functionality which is greater than 1.9.

5. Capped polyurethane prepolymers according to Claim 4, **characterized in that** component b) has an OH functionality which is greater than or equal to 1.95.

6. Capped polyurethane prepolymers according to one or more of Claims 2 to 5, **characterized in that** component c) is hydrocarbon resins having phenolic OH groups and having a hydroxy group content which is from 0.1% by weight to 10% by weight.

7. Capped polyurethane prepolymers according to Claim 6, **characterized in that** component c) is hydrocarbon resins which are liquid at room temperature and have a hydroxy group content which is from 2% by weight to 8% by weight.

8. Reactive systems comprising
A) polyurethane prepolymers according to Claim 2,
B) at least one organic amine having at least two primary amino groups,
C) optionally compounds having oxirane groups which comprise on average more than one oxirane group per molecule, and also
D) optionally catalysts and/or additives.

9. Use of the capped polyurethane prepolymers according to Claim 2 for producing adhesives, sealing compositions, potting compositions, composites (fibre-composite materials), mouldings and coatings.

10. Use of the capped polyurethane prepolymers according to Claim 2 for producing corrosion-protection coatings in hydraulic steel structures, in shipbuilding and for pipelines.

## Revendications

1. Procédé pour la préparation de prépolymères-polyuréthane bloqués, par mise en réaction de
a) un ou plusieurs di- ou polyisocyanates avec
b) un ou plusieurs polyétherpolyols qui présentent une teneur en groupes terminaux insaturés inférieure ou égale à 0,02 milliéquivalent par gramme de polyol, (méthode de détermination ASTM D2849-699), une polydispersité (PD = M_{w}/Mₙ) de 1,01 à 1,5 et/ou une fonctionnalité OH supérieure ou égale à 1,9,
conduisant à un prépolymère-polyuréthane à fonction NCO et blocage subséquent des groupes NCO avec
c) au moins une résine hydrocarbonée comportant des groupes OH phénoliques et/ou un phénol éventuellement substitué.

2. Prépolymères-polyuréthane bloqués pouvant être obtenus conformément au procédé selon la revendication 1.

3. Prépolymères-polyuréthane bloqués selon la revendication 2, **caractérisés en ce que** le composant a) est un polyisocyanate aromatique ou un mélange de polyisocyanates aromatiques.

4. Prépolymères-polyuréthane bloqués selon la revendication 2 ou 3, **caractérisés en ce que** le composant b) est un polyétherpolyol ayant une polydispersité de 1,1 à 1,5 et une fonctionnalité OH supérieure à 1,9.

5. Prépolymères-polyuréthane bloqués selon la revendication 4, **caractérisés en ce que** le composant b) présente une fonctionnalité OH supérieure ou égale à 1,95.

6. Prépolymères-polyuréthane bloqués selon une ou plusieurs des revendications 2 à 5, **caractérisés en ce que** le composant c) consiste en des résines hydrocarbonées comportant des groupes OH phénoliques, ayant une teneur en groupes hydroxy de 0,1 % en poids à 10 % en poids.

7. Prépolymères-polyuréthane bloqués selon la revendication 6, **caractérisés en ce que** le composant c) consiste en des résines hydrocarbonées liquides à la température ambiante, ayant une teneur en groupes hydroxy de 2 % en poids à 8 % en poids.

8. Systèmes réactifs, contenant
A) des prépolymères-polyuréthane selon la revendication 2,
B) au moins una amine organique comportant deux groupes amino primaires,
C) des composés comportant éventuellement des groupes oxirane, qui contiennent en moyenne plus d'un groupes oxirane par molécule ainsi que
D) éventuellement des catalyseurs et/ou des additifs.

9. Utilisation des prépolymères-polyuréthane bloqués selon la revendication 2, pour la production d'adhésifs, de matières d'étanchéité, de matières à couler, de composites (matériaux composites fibreux), de pièces moulées et de revêtements.

10. Utilisation des prépolymères-polyuréthane bloqués selon la revendication 2, pour la production de revêtements anticorrosion dans des constructions hydrauliques en acier, la construction navale et pour des pipelines.
